# EUROPEAN PATENT APPLICATION

(11) **EP 3 610 937 A1**
(43) Date of publication of application: **19.02.2020**
(21) Application number: 18188876.9
(22) Date of filing: 14.08.2018
(51) Int. Cl.: B01D 29/03, B01D 29/15, B01D 29/58, B01D 35/30, B01D 27/08, C02F 1/28, B01D 46/00, B29C 63/18, B29C 63/42

(54) **PROCESS FOR MANUFACTURING A FILTER ASSEMBLY, FILTER ASSEMBLY AND WATER CONTAINER**

(71) Applicant: Brita GmbH, 65232 Taunusstein (DE)
(72) Inventor: HORN, Marcus, 65207 Wiesbaden (DE); FLOREN, Simon, 65620 Waldbrunn (DE)

(57) **Abstract**

A process for manufacturing a filter assembly (1) with at least two filter units (20a, 20b, 20c), with the following steps:
a) arranging the filter units (20a, 20b, 20c) along a common flow path (P1, P2);
b) arranging a shrinkable tubing (60) at least partially around the filter units (20a, 20b, 20c);
c) shrinking the tubing (60) around the filter units (20a, 20b, 20c).

## Description

The present invention relates to a process for manufacturing a filter assembly, a filter assembly and a water container.

Filter assemblies are used to extract certain substances from a fluid, in particular from water. In many cases, the fluid from which said substances are extracted is water (untreated water). The extraction of substances (the filtration) is used to improve the quality of the fluid.

Substances to be extracted comprise life forms such as viruses or bacteria as well as elements or molecules such as chlorine, drug traces and lead that lessen the quality of the water.

Extraction of the unwanted substances may be achieved by using different kinds of filter units, such as active coal unit and membrane filters.

Active coal is known to extract certain substances from water including chlorine. For a filter assembly, active coal may be used in the form of loose particles (powder) arranged in a container through which the water can flow on its way through the filter assembly. Alternatively, the active coal may be formed into a porous body through the use of a binder such as polyethylene. Such porous bodies may be called coal discs. Water flowing through coal discs is filtered by the active coal contained in the body.

Membrane filters comprise a permeable membrane, which creates a barrier for substances of a certain size. Substances or particles that are smaller (including the water itself) can pass through the membrane while larger substances or particles are prevented from passing through and are thereby extracted from the water flowing through the membrane. Membrane filters are often classified according to the size of the particles or substances they are able to filter out. As a result, membrane technology is often divided into microfiltration, ultrafiltration, nanofiltration and reverse osmosis going from bigger to smaller particle sizes.

The combination of an active coal unit and a membrane unit is known from the state of the art. European patent application EP 3 162 767 A1 discloses such a combination. In said document, it is proposed to arrange a molded active carbon filter element in line with a hollow fibre membrane unit in order to treat water. The assembly of the two elements is complicated, because the filter assembly needs to be provided with an annulus water passage around the hollow fibre membrane.

In the assembly of EP 3 162 767 A1 the stream of untreated water and the stream of treated water both enter through one end of the assembly. It is therefore necessary to provide various sealing elements to keep the two streams separate. Additional sealing elements lead to additional manufacturing cost. Also, separate sealing elements that need to be placed during the production process are prone to failure.

WO 2013/139821 A1 addresses this sealing problem. Said document discloses an assembly in which an annular seal is directly formed onto an active coal disc by injection molding. While this process provides a tight seal around the active coal disc, it has some drawbacks. Using an injection molding machine in combination with active coal has proven to be disadvantageous. During the injection molding process active coal particles come into contact with the mold of the injection molding machine, which can lead to a carburization of the mold material as well as abrasion of the mold. As a result, molds used for such processes have a very short service life making the production cost high.

The invention aims at providing a better, more feasible process for manufacturing a filter assembly having at least two filter units wherein the filter assembly is free of bypasses and interstices.

It is also an object of the invention to provide a filter assembly and a water container that is free of bypasses and does not germinate.

This is achieved by the process according to claim 1.

The shrinking of the tubing around the filter units is preferably achieved by applying heat and/or radiation to at least the shrinkable tubing. Heat generally refers to temperatures above room temperature. The heat may preferably be applied by hot air or a flame. The radiation can be applied via a radiation source.

Shrinking of a tubing may be described as a process in which a tube is reduced in size, in particular regarding its diameter. During shrinking, preferably no material is being taken from the tubing.

The process has the advantage to manufacture a stable filter assembly without the need of additional components, like threads, seals etc. The thickness of the tubing and hence the assembly wall is very thin so that there is no need for a significant larger installation space e.g. in bottles. The installation space is substantially only determined by the volumes of the filter units.

The process is a robust one, that means the process parameters are noncritical. The applied heat only depends on the softening point of the tubing material. The application time depends on the thickness of the tubing and on the applied heat power. Therefore, the claimed process is a low cost method.

Another advantage is having a bypass-free assembly that can be manufactured in an easy manner. The shrinkable tubing encompasses the outer surfaces of the filter units in their entirety even if the filter units comprise different shapes, in particular different diameters. Furthermore, the process is independent of the number of filter units. The process is universally applicable and thus suitable for mass production.

The shrunken tubing has the further advantage that a detachment of filter material is prevented, which significantly improves the filtration properties of the filter assembly.

The tubing can be easily adapted to the size of the filter units to be combined by cutting the length of the tubing.

The term "filter unit" comprises units having fluid filtration properties and/or fluid treatment properties.

Arranging the filter units along a common flow path preferably means arranging the filter units along a common axis, in which the filter units contact each other. The outlet surface of a filter unit preferably contacts the inlet surface of an adjacent filter unit.

Arranging the shrinkable tubing at least partially around the filter means that the tubing covers those surfaces of the filter units which are not used as inlet surface and outlet surface for the fluid. The inlet and outlet surfaces are called through-flow surfaces. The size of the through-flow surfaces can easily be defined by the size of the tubing.

Preferably the filter units are water filter units. Filter assemblies preferably comprising water filter units can be easily used in water bottles.

Preferably, before shrinking, the tubing has a length L greater than a common height H of the arranged filter units (L > H).

The advantage of an oversized tubing is that during the shrinking step at least one end of the tubing is enabled to encompass the edge of a through-flow surface of the corresponding terminal filter of the filter assembly unit and form a collar. Such a collar improves the fixing of the corresponding filter unit and the stability of the filter assembly. If both ends of the tubing are able to encompass the edges of the through-flow surfaces of both terminal filter units of the filter assembly two collars are formed. The stability of the filter assembly in its entirety is further improved.

Preferably pressure is applied to the filter units at least partially during step c) thereby pressing the filter units together. The contact between adjacent through-flow surfaces is improved and interstices between the through-flow surfaces are minimized.

Preferably the pressure is applied along the flow path. This leads to a stabilization of the filter units during assembly, which improves the production tolerance.

Preferably two holding dies are used for applying the pressure. The holding dies are arranged on opposite sides of the arranged filter units.

Preferably at least one shaping die is used to support the shrinking of the tubing either during or after step c).

The shaping die contributes to a better contact of the tubing with the outer surfaces of the filter units during the shrinking step. The shaping die is preferably adapted to the shape of the filter units. In case the filter units to be combined have different shapes, e.g. different diameters, the shaping die is able to improve the contact of the tubing with the filter units. Bypasses inside of the filter assembly, in particular between shrunken tubing and filter unit are prevented even better. The shaping dies are preferably jaws, which together have a ring shape. Each jaw forms a part of a ring, preferably half a ring.

Preferably the shaping die is used in connection with an ultrasonic source to apply ultrasonic waves to the tubing.

The shrinking step c.) is preferably combined with an ultrasonic welding step.

Ultrasonic welding is a method of joining preferably thermoplastic components by heating and subsequent melting of surfaces in contact. Ultrasonic welding is a technique whereby high-frequency ultrasonic acoustic vibrations are locally applied to workpieces being held together under pressure to create a solid-state weld. It is used for plastics, and especially for joining dissimilar materials. In ultrasonic welding, there are no connective bolts, nails, soldering materials, or adhesives necessary to bind the materials together.

Preferably the tubing and at least one component of the filter units consists of a thermoplastic material, e.g. PE, PP, PC, PET, PA.

Mechanical vibration with frequency between 10 and 70 kHz and amplitude of 10 to 250 µm is applied to joining parts. After ultrasonic energy is turned off, the parts remain in contact under pressure for some time, i.e. one to ten seconds, while the melt layer cools down creating a weld.

The following advantages are attributed to ultrasonic welding:
it's an easily automated process that is overall inexpensive. The tool in use can be quickly changed and the process is rather quick and typically completed in a single operation. The process does not introduce contaminants to the weld joints. Therefore, it is well-suited for the filtration industry, in particular the water filtration industry.

Preferably the shaping die is applied in at least one transition area of two neighboring filter units.

The transition areas between two adjacent filter units can cause a problem, in particular if both filter units have different diameters. There is a risk that in the transition area the shrunken tubing does not completely contact the outer surfaces of the filter units, so that fluid and germs can accumulate in interstices there. However, when the shaping die is applied in such critical areas interstices can be easily prevented.

According to the invention a filter assembly having at least two filter units arranged along a common flow path comprises a tubing shrunken at least partially around the filter units.

A shrunken tubing has a close contact to the outer surface of the filter units so that bypasses and interstices are prevented. A germination of the filter assembly can be easily prevented.

Preferably the filter units are of different types, thereby combining at least two advantageous treatment options in one filter assembly.

Since different filter units can be easily combined, the filter assembly can be adapted to different tasks.

Preferably at least one of the filter units is selected from the following:
- sieve unit;
- fluid treatment unit;
- membrane unit.

Preferably the fluid treatment unit is a water treatment fluid that comprises at least one of the following components:
- active coal;
- ion exchange resin;
- oxidizing agent;
- food additive.

Preferably the water treatment unit comprises at least one cup, in which at least a granular filtration or granular treatment component is arranged.

Preferably the component is formed together with a binder into a porous body, in particular a porous disc. Even though only active coal is commonly formed into porous bodies, other components may be formed into a porous body as well, in particular inorganic ion exchange resin, minerals and salt.

Preferably the membrane unit is a micro filtration membrane unit or an ultra filtration membrane unit.

Preferably the membrane unit is a hollow fibre membrane unit.

Preferably the membrane unit is provided with a housing.

Preferably the housing is made from plastic, in particular PE, PP, PC, PET, PA.

Preferably the housing generally has the shape of a hollow cylinder.

Preferably at least one of the filter units is of generally cylindrical shape.

Preferably the filter units have different diameters.

Preferably the filter units are arranged coaxially.

The order of filter units in the filter assembly can be chosen as needed.

Preferably the tubing is made from plastic, in particular a fluoropolymer, in particular PTFE (Polytetrafluorethylene), FEP (Fluorinated ethylene propylene), PFA (Perfluoroalkoxy alkanes), ETFE (Ethylene tetrafluoroethylene), PCTFE (Polychlorotrifluoroethylene), PVDF (polyvinylidene difluoride) or ECTFE (Ethylene chlorotrifluoroethylene).

Preferably the tubing comprises at least one collar, which encompasses an edge of a terminal filter unit of the assembly.

A water container has a container housing with a water tank and a filter assembly according to the invention.

The invention will now be explained in detail based on preferred examples of embodiments with reference to the appended figures, in which:
- Figure 1: is a perspective view of the parts of a filter assembly according to a first embodiment of the invention,
- Figure 2a: is a cross sectional side view of a filter assembly according to a second embodiment of the invention being assembled,
- Figure 2b: is a cross sectional side view of the assembled filter assembly of figure 2a,
- Figures 3a to 3e: show five steps in the production process of a filter assembly according to a third embodiment of the invention, each in a cross sectional side view,
- Figure 4a: is a perspective view of a filter assembly according to a fourth embodiment of the invention,
- Figure 4b: is a cross sectional perspective view of the filter assembly according to figure 4a,
- Figure 5: is a cross sectional perspective view of a filter assembly according to a fifth embodiment of the invention,
- Figure 6: is a cross sectional perspective view of a filter assembly according to a sixth embodiment of the invention,
- Figure 7a: is a cross sectional perspective view of a filter assembly according to a seventh embodiment of the invention being assembled,
- Figure 7b: is the assembled filter assembly of figure 7a,
- Figure 8a: is a cross sectional side view of a carafe comprising a filter assembly,
- Figure 8b: is the carafe of figure 8a in a cross sectional perspective view in part,
- Figure 9a: is a cross sectional side view of a bottle comprising a filter assembly,
- Figure 9b: is the bottle of figure 9a in a cross sectional perspective view in part.

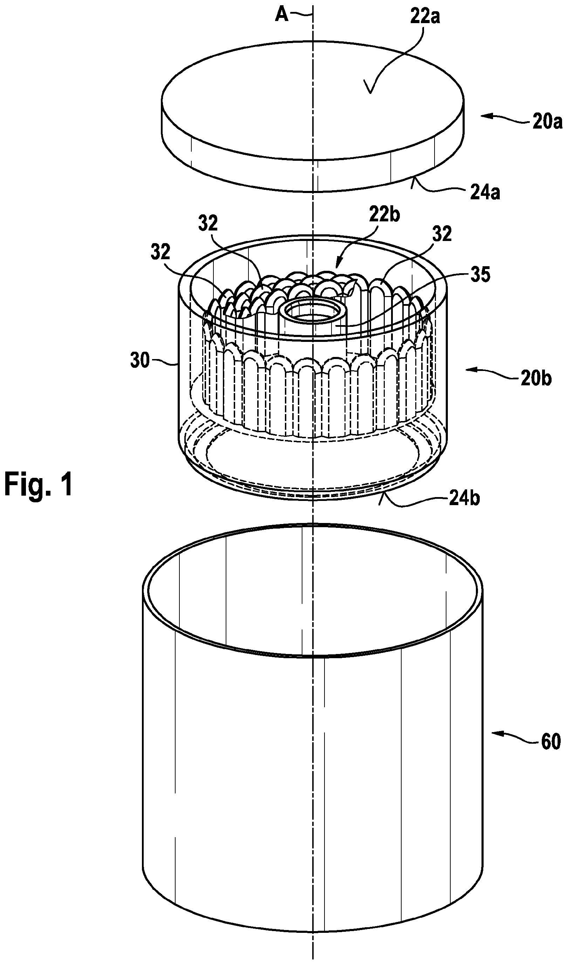

Figure 1 shows a first embodiment of the invention being assembled. Shown is a first filter unit 20a and a second filter unit 20b. The first filter unit 20a is a porous disc comprising active coal and a binder. The filter unit 20a has an inlet surface 22a and an outlet surface 24a. In use, water flows through the inlet surface 22a into the filter unit 20a, in which it is treated through the contact with the active coal in the filter unit 20a. The water then flows out of the outlet surface 24a, thereby exiting the filter unit 20a.

The second filter unit 20b is a microfiltration membrane unit, in particular a hollow fibre membrane unit. The filter unit 20b is provided with a housing or a cup 30. The cup 30 is pipe shaped. Inside the cup 30 there are several hollow fibres 32. Each hollow fibre 32 generally has the shape of a U with two ends. Both ends of each fibre 32 are oriented downwards, that is towards the outlet surface 24b. The ends of the hollow fibres 32 are all fixated by a resin (not shown).

Before being arranged inside the cup 30 the hollow fibres 32 are arranged in a layer. In figure 1, several layers of fibres 32 are arranged concentrically around a central core 35. The outermost layer is shown completely while two layers located radially inwards are shown only partially. In other embodiments, only one layer wrapped around the central core 35 in a spiral manner may be used.

The filter unit 20b is provided with an inlet surface 22b and an outlet surface 24b. In use, water coming from the first filter unit 20a flows through the inlet surface 22b into the filter unit 20b, where it is filtered by the hollow fibres 32 of the filter unit 20b. The water then flows out of the outlet surface 24b, thereby exiting the filter unit 20b.

During the assembly, the filter units 20a, 20b are arranged along a common axis A. In use, water flows along said axis along a flow path, which may lead first through the inlet surface 22a into the filter unit 20a through the outlet surface 24a and then through the inlet surface 22b into the filter unit 20b and then through the outlet surface 24b. During the assembly the filter units 20a, 20b are arranged along said common flow path, in particular by arranging the outlet surface 24a on the inlet surface 22b.

A tubing 60 is arranged around the filter units 20a, 20b. The tubing 60 is shrinkable. By applying heat to the tubing 60, the tubing 60 is shrunk around the filter units 20a, 20b. This production step will be explained in detail with regard to the rest of the figures in the following.

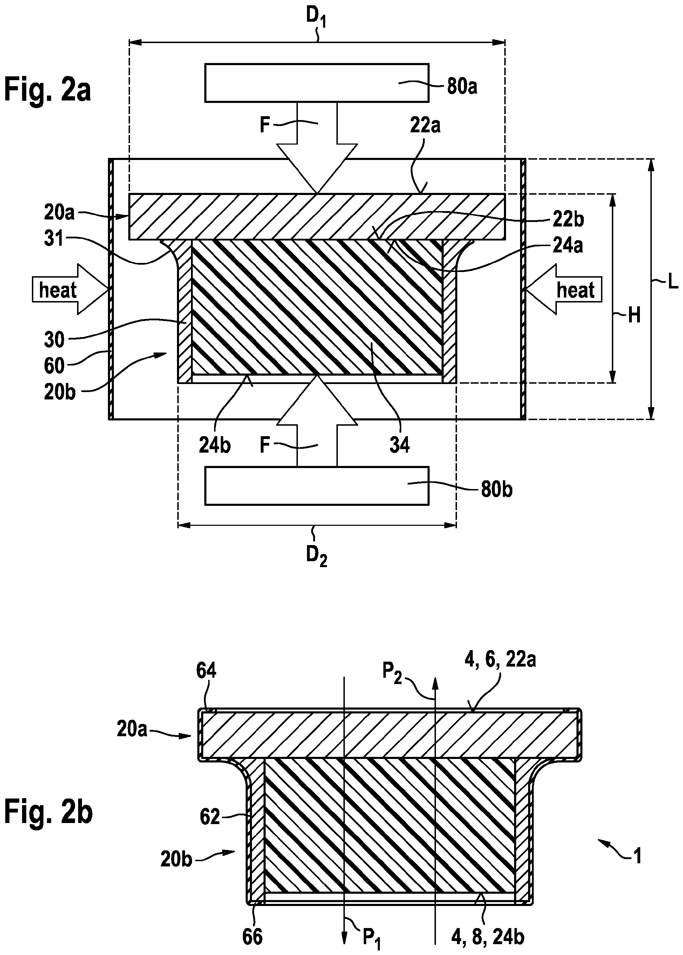

Figure 2a shows a second embodiment of a filter assembly according to the invention during the production process. In figure 2a, two filter units 20a and 20b have been arranged along a common flow path. It should be noted that the water may flow either along a first flow path P₁, thereby flowing first through the first filter unit 20a and then through the second filter unit 20b or along a second flow path P₂, thereby flowing first through the second filter unit 20b and then through the first filter unit 20a (see figure 2b). Filter unit 20a is an active coal disc. Filter unit 20b is a fluid treatment unit comprising a cup 30 and a component 34 for treating water. The component 34 may include an ion exchange resin, an oxidizing agent or a food additive. In the embodiment shown, component 34 is one solid body including a binder. In other embodiments the component 34 may be, for example, a granular material located in the cup 30. Each filter unit 20a, 20b is provided with an inlet surface 22a, 22b and an outlet surface 24a, 24b.

A shrinkable tubing 60 is arranged around the filter units 20a, 20b. The filter units 20a, 20b have a combined height H. The tubing 60 has a length L, which is greater than the height H.

Two holding dies 80a, 80b are shown together with the holding force F that is applied to the filter units 20a, 20b during the production process for holding and pressing the filter units 20a, 20b together. When the filter units 20a, 20b are held by the holding dies 80a, 80b, heat is applied to the tubing 60 thereby shrinking the tubing 60 around the filter units 20a, 20b forming the shrunken tubing 62.

The filter units 20a, 20b are of generally cylindrically shape having different diameters D₁, D₂. In particular, filter unit 20a has a diameter D₁, which is greater than diameter D₂ of filter unit 20b.

The cup 30 of filter unit 20b is provided with a radius 31 in the area where the two filter units 20a, 20b are in contact with each other. As can be seen in figure 2b, the shrunken tubing 62 follows the geometry of the cup 30 and the radius 31.

The shrunken tubing 62 forms two collars 64, 66 on the inlet surface 22a of the filter unit 20a and the outlet surface 24b of the filter unit 20b respectively. The collars 64, 66 are formed, because the length L is greater than the height H. In a way, the tubing 60 is too long for the height H, which leads to the ends of the tubing 60 shrinking around said surfaces 22a, 24b of the filter units 20a, 20b, thereby forming the collars 64, 66.

The filter assembly 1 has two through-flow surfaces 4, one inlet surface 6 and one outlet surface 8. The inlet surface 6 is also the inlet surface 22a of the filter unit 20a. The outlet surface 8 is also the outlet surface 24b of the filter unit 20b.

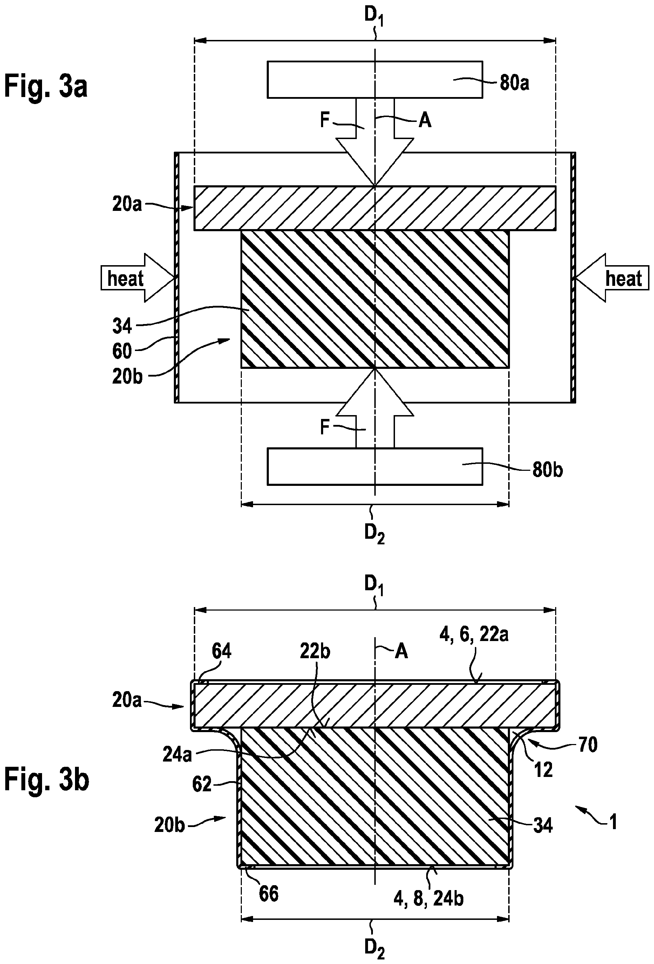

Figures 3a to 3e show the production process of a third embodiment of the invention. The embodiment is similar to the second embodiment and comprises two filter units 20a, 20b. The filter units 20a, 20b are again of different diameters D₁, D₂. In figure 3a, the filter units 20a, 20b are arranged along a common flow path. Shown are two holding dies 80a, 80b, which will hold the filter units 20a, 20b during the shrinking of the tubing 60 with holding force F.

The component 34 of the second filter unit 20b according to the third embodiment is of a strict cylinder shape. As can be seen in figure 3b this leads to an interstice 12 in a transition area 70 where the two filter units 20a, 20b are in contact with each other. Similar to the second embodiment, component 34 is one solid body including a binder. However, component 34 is not located inside a cup 30 as is the case in the second embodiment.

The filter assembly 1 has two through-flow surfaces 4, one inlet surface 6 and one outlet surface 8. The inlet surface 6 is also the inlet surface 22a of the filter unit 20a. The outlet surface 8 is also the outlet surface 24b of the filter unit 20b.

The interstice 12 is disadvantageous, because it will be filled with water during use of the filter assembly 1. Said water could stay in said interstice 12 for a longer period of time, which can lead to a germification of said water. Also, the interstice 12 may lead to a bypass around the second filter unit 20b, which is also disadvantageous. An interstice 12 is especially problematic when located outside a cup 30, into which water cannot pass in radial direction.

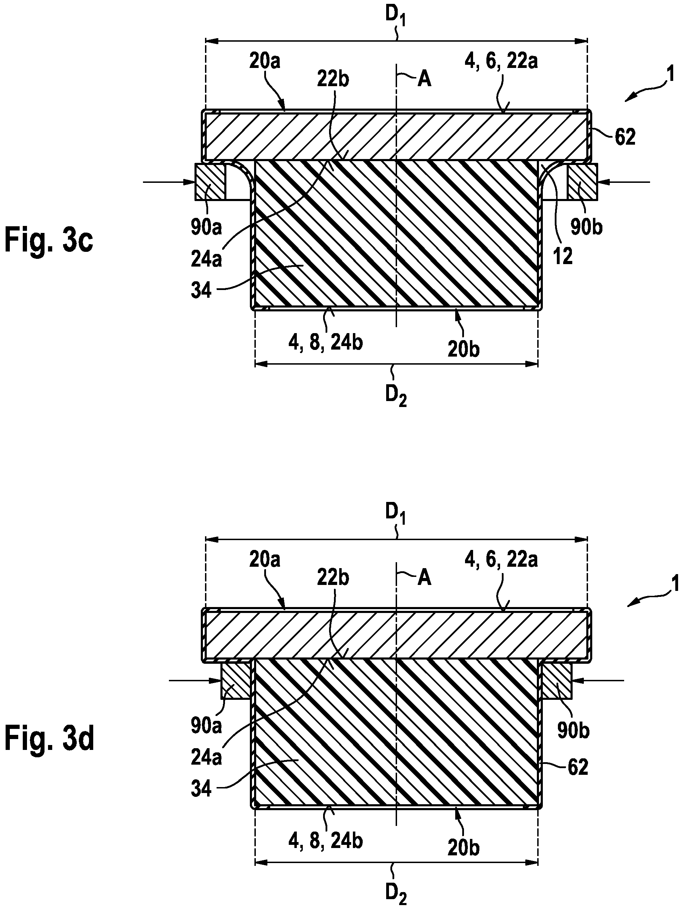

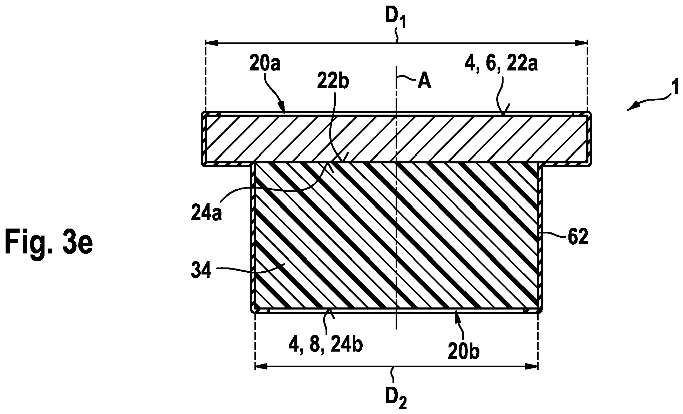

In order to remove the interstice 12, two shaping dies 90a, 90b are employed as can be seen in figures 3c and 3d. Together, the shaping dies 90a, 90b form a ring. Each of the shaping dies 90a, 90b forms half a ring. The shaping dies 90a, 90b are applied perpendicular to the axis A of the filter units 20a, 20b. The shaping dies 90a, 90b can be applied both during or after the heating of the tubing 60. The shaping dies 90a, 90b may be provided with an ultrasonic source or may be heated themselves in order to improve the shaping of the tubing 60. As can be seen in figures 3d and 3e the use of the shaping dies 90a, 90b remove the interstice 12, thereby improving the overall quality of water filtered by the filter assembly 1 shown in figure 3e.

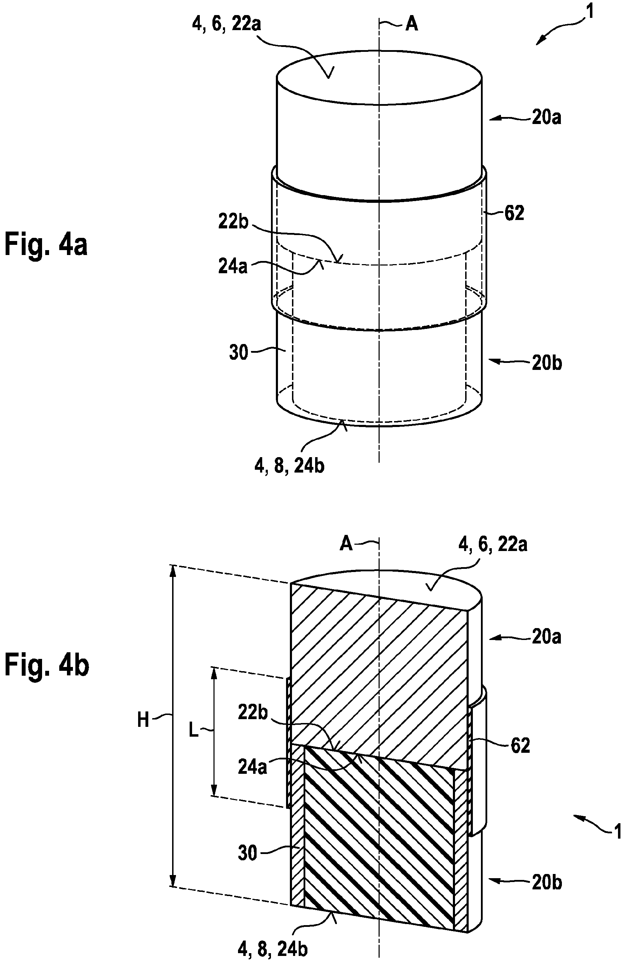

Figures 4a and 4b show a forth embodiment of a filter assembly 1 according to the invention. The filter assembly 1 comprises two filter units 20a, 20b and a shrunken tubing 62. The filter units 20a, 20b are of generally cylindrical shape having the same diameter. The two filter units 20a, 20b are arranged along a common flow path by being arranged along a common axis A and by being as contact with each other. Tubing 62 has a length L, which is shorter than the height H of the two filter units 20a, 20b.

Due to the length L and the height H, the shrunken tubing 62 only covers the outer cylindrical surfaces of the filter units 20a, 20b partially. In particular, the shrunken tubing 62 is arranged in an area where the two filter units 20a, 20b are in connection with each other. The two filter units 20a, 20b are fixated to each other by the shrunken tubing 62.

Both filter units 20a, 20b have an inlet surface 22a, 22b and an outlet surface 24a, 24b, respectively. The outlet surface 24a is in immediate connection with the inlet surface 22b of the filter unit 20b. The inlet surface 22a provides an inlet surface 6 for the filter assembly 1. The outlet surface 24b acts as outlet surface 8 for the filter assembly 1.

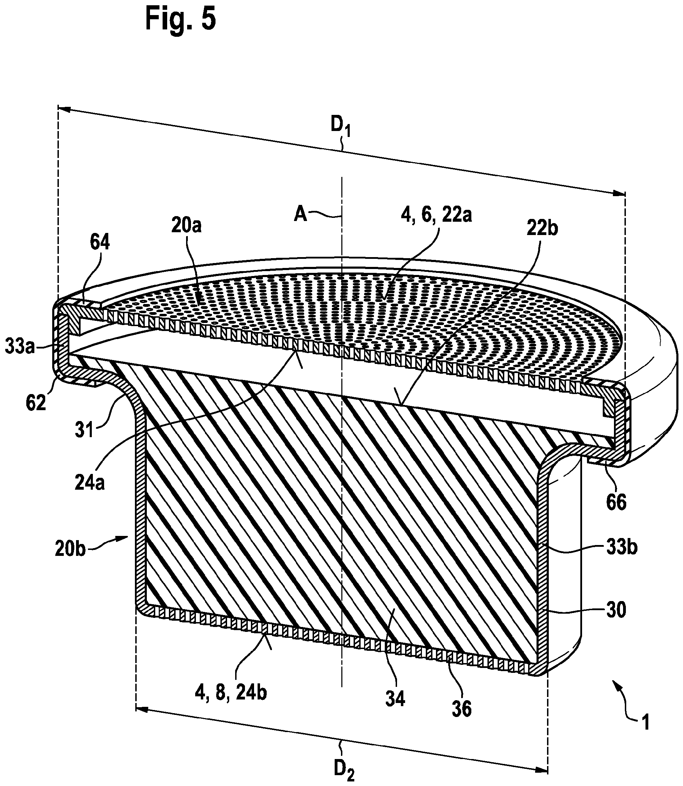

Figure 5 shows a fifth embodiment of a filter assembly 1 according to the invention. The filter assembly 1 comprises two filter units 20a, 20b and a shrunken tubing 62 connecting the two filter units 20a, 20b with each other. The first filter unit 20a is a sieve unit having a multitude of holes and having an inlet surface 22a and an outlet surface 24a. The second filter unit 20b has a cup 30, in which a water treatment component 34 is arranged. In one end area, the cup 30 is provided with a sieve 36, which forms an outlet surface 24b for the filter unit 20b and an outlet surface 8 for the filter assembly 1. The sieve 36 is provided with a multitude of holes.

The component 34 may be provided in the form of one solid body or in the form of particles, which are big enough so that they do not pass through either the first filter unit 20a or the sieve 36.

The first filter unit 20a has an outer diameter D₁. The second filter unit 20b has two sections 33a and 33b arranged one behind the other along the axis A having different diameters. The section 33a has the same diameter D₁ as the first filter unit 20a while the second section 33b has a smaller diameter D₂. The two sections 33a, 33b are connected by a radius 31. The shrunken tubing 62 connects the two filter units 20a, 20b by being shrunk around the first filter unit 20a and the first section 33a of the second filter unit 20b. The shrunken tubing 62 forms a first collar 64 on the first filter unit 20a and a second collar 66 on the section 33a of the second filter unit 20b.

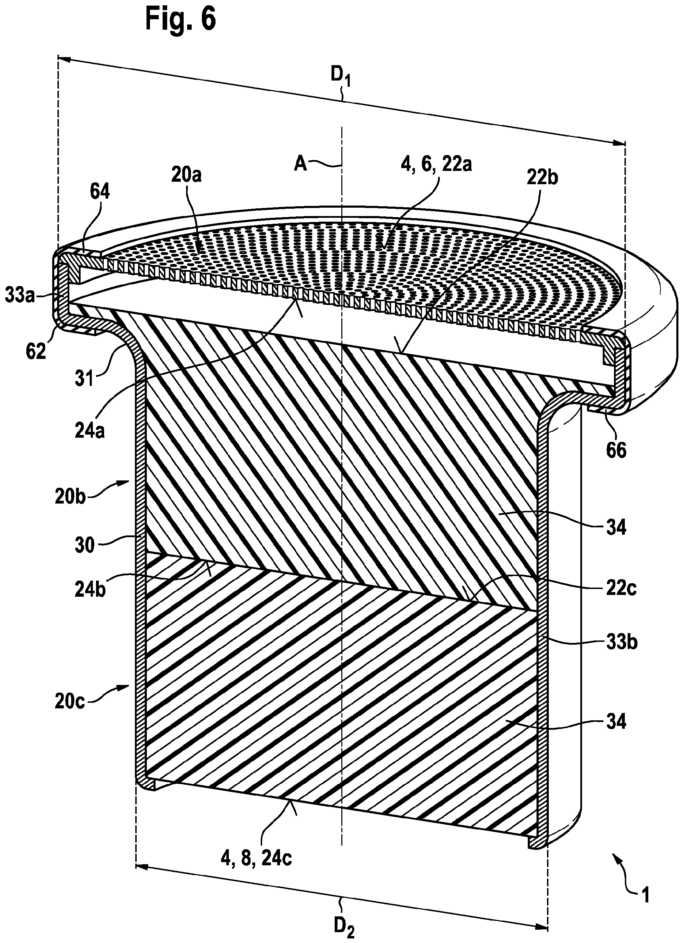

Figure 6 shows a sixth embodiment of a filter assembly 1 according to the invention. The filter assembly 1 comprises three filter units 20a, 20b, 20c as well as a shrunken tubing 62. The filter units 20b, 20c share a common cup 30. The shrunken tubing 62 connects the cup 30 with the first filter unit 20a. Filter units 20a, 20c are terminal filter units having the filter unit 20b located inbetween.

The first filter unit 20a is a sieve unit much like the one of the fifth embodiment according to figure 5. The first filter unit 20a has an inlet surface 22a, which acts as inlet surface 6 for the filter assembly 1.

The cup 30 is provided with two sections 33a, 33b having different diameters D₁, D₂. Unlike the one in the fifth embodiment, the cup 30 is open at both ends along the axis A. Inside the cup 30 are located two components 34, one for each of the filter units 20b, 20c. The outlet surface 24b is in direct connection with the inlet surface 22c of the third filter unit 20c. The outlet surface 24c forms the outlet surface 8 for the filter assembly 1.

The two sections 33a, 33b, of the cup 30 are connected by a radius 31. Much like in the fifth embodiment, the shrunken tubing 62 is shrunk around the first filter unit 20a and the section 33a of a cup 30 forming two collars 64, 66.

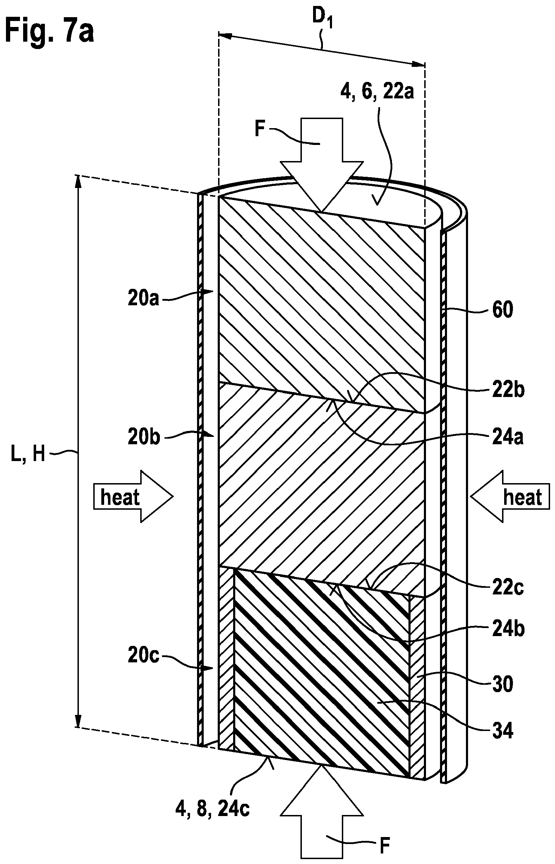

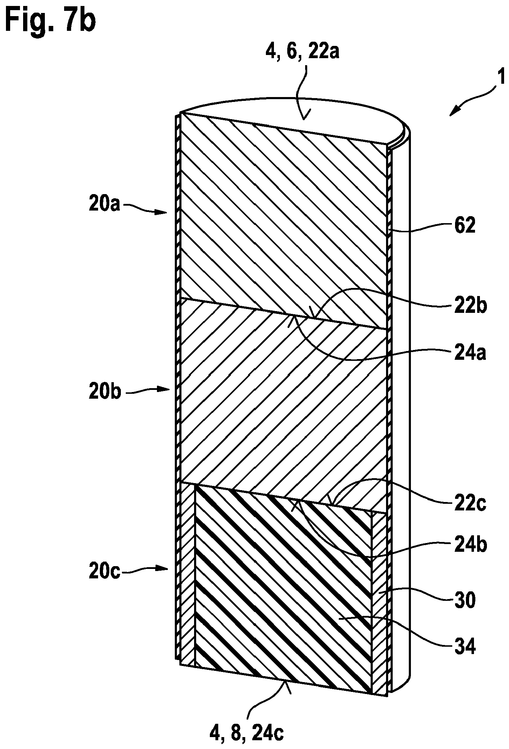

Figure 7a shows a seventh embodiment of a filter assembly 1 according to the invention during production. Figure 7b shows the filter assembly 1 in its assembled form. The filter assembly 1 comprises three filter units 20a, 20b, 20c with filter units 20a, 20c being terminal. All filter units 20a, 20b, 20c are of cylindrical shape and have the same diameter D₁. During the production of the filter assembly 1, the filter units 20a, 20b, 20c are held together as indicated by the holding force F. Each of the filter units 20a, 20b, 20c has an inlet surface 22a, 22b, 22c and an outlet surface 24a, 24b, 24c. The inlet surface 22b is in direct connection with the outlet surface 24a and the inlet surface 22c is in direct connection with the outlet surface 24b. The inlet surface 22a forms the inlet surface 6 of the filter assembly 1 while the outlet surface 24c forms the outlet surface 8 of the filter assembly 1.

The filter unit 20c has a cup 30 having a component 34 provided therein. The filter units 20a, 20b, 20c are all different from each other regarding the treatment functionality. For example, filter unit 20a may be an active coal filter unit, while filter unit 20b may comprise an ion exchange material and filter unit 20c may contain a food additive.

Before shrinking, as seen in figure 7a, the combined height H of the filter units 20a, 20b, 20c is identical to the length L of the tubing 60. Due to the shrinking process, in which heat is applied to the tubing 60, the shrunken tubing 62 is a little bit shorter than the combined height H of the filter units 20a, 20b, 20c.

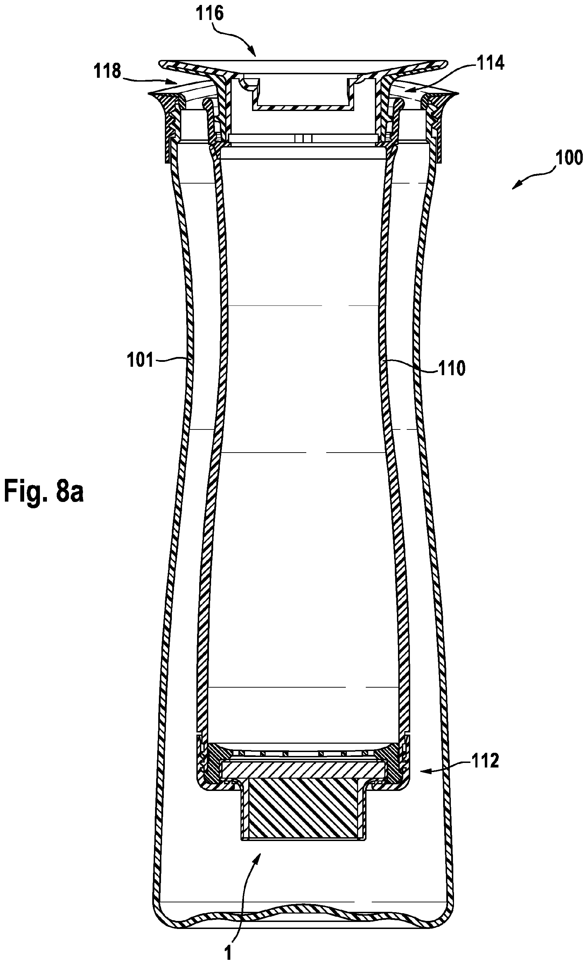

Figure 8a shows a carafe 100 with a housing 101 of elongated form. The carafe 100 is provided with an insert 110, which is also of elongated form, located inside the housing 101. A water outlet 118 is formed between the outer surface of the insert 110 and the inner surface of the housing 101. The water outlet 118 has a ring shape.

The insert 110 is provided with a filter assembly 1 in a bottom portion 112 of the insert 110. In an upper portion 114, the insert 110 is provided with a water inlet, which may be closed by a plug 116. In use, untreated water may be filled into the insert 110 via the water inlet. Due to the influence of gravity, the water is then pushed through the filter assembly 1, in which it is treated. The water then flows into the volume (water tank) between the outer surface of the insert 110 and the inner surface of the housing 101. From there, water may exit the carafe 100 through the water outlet 118 by tilting the carafe 100. When tilting, it is necessary to have the plug 116 in place so that no untreated water may exit through the water inlet.

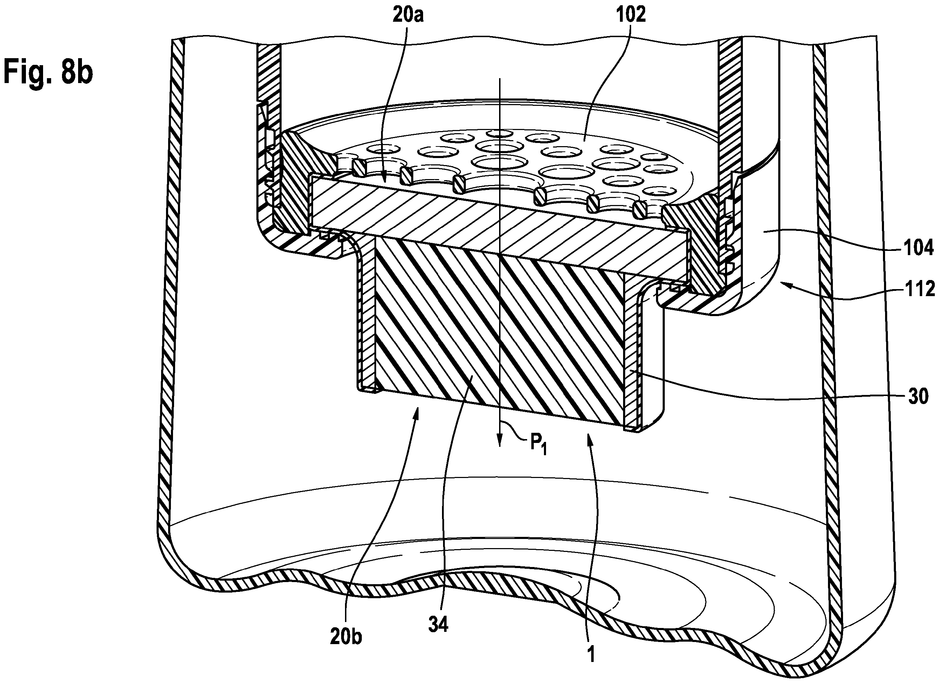

Figure 8b shows the bottom portion 112 in detail. The insert 110 is provided with a screen 102, which mainly protects the filter assembly 1 and has no immediate filter functionality. The filter assembly 1 comprises two filter units 20a, 20b. In the present embodiment, the filter assembly 1 is essentially identical to the second embodiment of figure 2b. The filter assembly 1 is held in place inbetween the screen 102 and a bottom piece 104 of the insert 110.

Water flows from the inside of the insert 110 along the flow path P₁ passing first through the first filter unit 20a and then through the second filter unit 20b before entering the volume formed between the insert 110 and the housing 101.

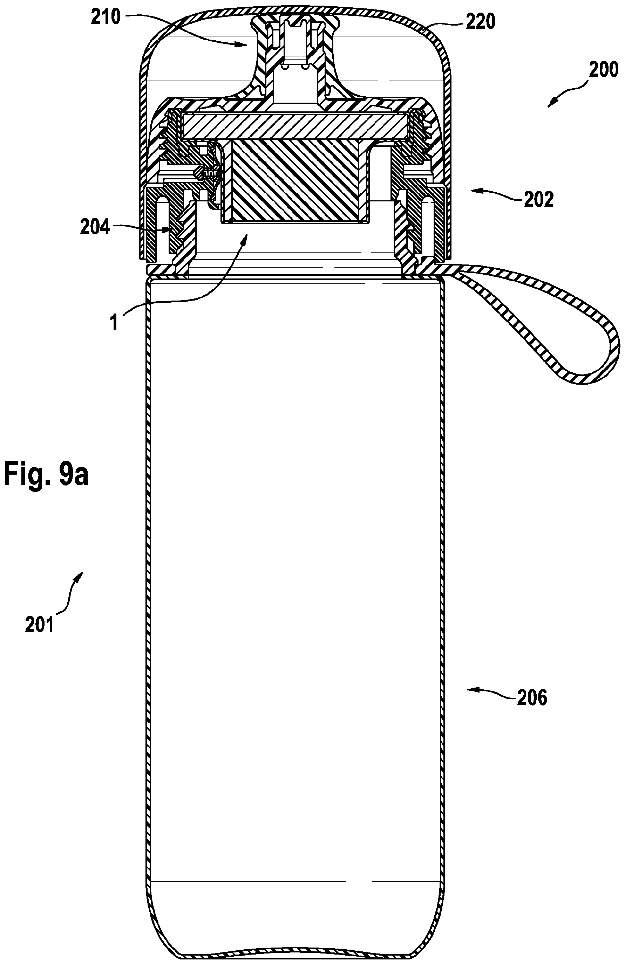

Figure 9a shows a bottle 200 having a filter assembly 1. The bottle 200 comprises a head portion 202 and a body portion 206, which are connected to each other by a thread connection 204. Together, the head portion 202 and the body portion 206 form a housing 201. The body portion 206 is an essentially hollow container for water (water tank). For filling the body portion 206 with water, the head portion 202 can be removed from the body portion 206 revealing an opening through which water may be poured into the body portion 206.

The head portion 202 is provided with a cap 210, in particular a sports cap. The filter assembly 1 is located in the head portion 202. Water flowing from the body portion 206 to the cap 210 must first pass through the filter assembly 1. When the cap 210 is in an open position, water may be extracted from the bottle 200 by squeezing the body portion 206, by tilting the bottle 200 upside down or by sucking on the cap 210. In each case, the water contained within the body portion 206 is filtered by the filter assembly 1 before exiting the bottle 200 via the cap 210.

The bottle 200 comprises a cover 220, which essentially covers the head portion 202, thereby protecting the cap 210 from environmental and mechanical influences.

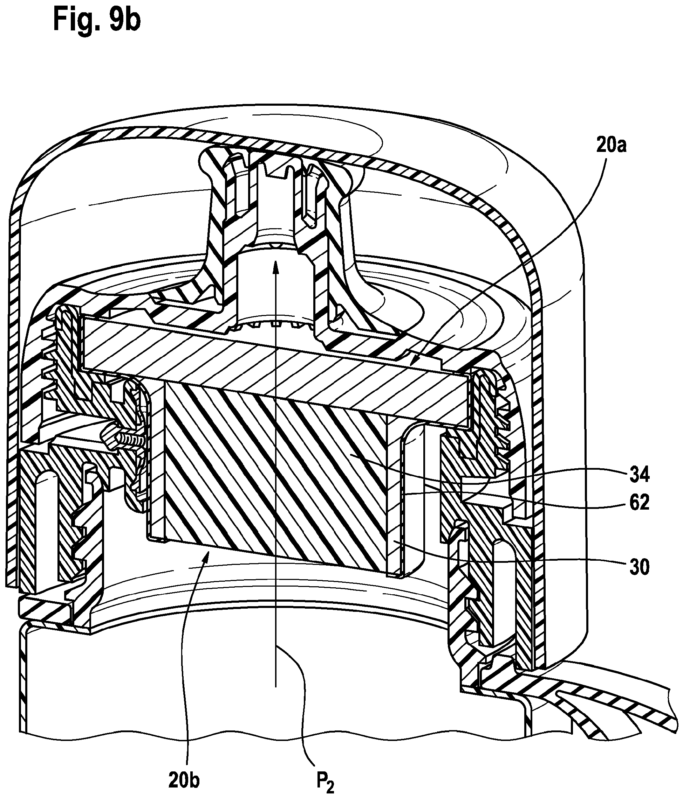

The filter assembly 1 is essentially the one shown in figure 2b and one used in the carafe 100 of figure 8a. However, in comparison to the carafe 100, the flow path of the water is reverse. As can be seen in figure 9b, water from the body portion 206 passes first through the second filter unit 20b and then through the first filter unit 20a along the flow path P₂. In this embodiment, water is first treated by the second filter unit 20b and then by the first filter unit 20a.

### Reference numbers

- 1: filter assembly
- 4: through-flow surface
- 6: inlet surface
- 8: outlet surface

- 12: interstice

- 20a, b, c: filter unit
- 22a, b, c: inlet surface
- 24a, b, c: outlet surface

- 30: cup
- 31: radius
- 32: hollow fibre
- 33a, b: section
- 34: component
- 35: core
- 36: sieve

- 60: tubing
- 62: shrunken tubing
- 64: collar
- 66: collar

- 70: transition area

- 80a, b: holding die
- 90a, b: shaping die
- 100: carafe
- 101: housing
- 102: screen
- 104: bottom piece

- 110: insert
- 112: bottom portion
- 114: upper portion
- 116: plug
- 118: water outlet

- 200: bottle
- 201: housing
- 202: head portion
- 204: thread connection
- 206: body portion

- 210: cap

- 220: cover

- A: axis
- D₁: diameter
- D₂: diameter
- F: holding force
- H: height
- L: length
- P₁: flow path
- P₂: flow path

## Claims

1. A process for manufacturing a filter assembly (1) with at least two filter units (20a, 20b, 20c), with the following steps:
a) arranging the filter units (20a, 20b, 20c) along a common flow path (P₁, P₂);
b) arranging a shrinkable tubing (60) at least partially around the filter units (20a, 20b, 20c);
c) shrinking the tubing (60) around the filter units (20a, 20b, 20c).

2. The process for manufacturing a filter assembly (1) according to claim 1, wherein the filter units (20a, 20b, 20c) are water filter units.

3. The process for manufacturing a filter assembly (1) according to one of the preceding claims, wherein before shrinking the tubing (60) has a length L greater than a common height H of the arranged filter units (20a, 20b, 20c) (L > H).

4. The process for manufacturing a filter assembly (1) according to one of the preceding claims, wherein pressure is applied to the filter units (20a, 20b, 20c) at least partially during step c), thereby pressing the filter units (20a, 20b, 20c) together.

5. The process for manufacturing a filter assembly (1) according to claim 4, wherein the pressure is applied along the flow path (P₁, P₂).

6. The process for manufacturing a filter assembly (1) according to claim 4 or 5, wherein two holding dies (80a, 80b) are used for applying the pressure.

7. The process for manufacturing a filter assembly (1) according to one of the preceding claims, wherein at least one shaping die (90a, 90b) is used to support the shrinking of the tubing (60) either during or after step c).

8. The process for manufacturing a filter assembly (1) according to claim 7, wherein the shaping die (90a, 90b) is used in connection with an ultrasonic source to apply ultrasonic waves to the tubing (60).

9. The process for manufacturing a filter assembly (1) according to claim 7 or 8, wherein the shaping die (90a, 90b) is applied in at least one transition area (70) of two neighboring filter units (20a, 20b, 20c).

10. A filter assembly (1) having at least two filter units (20a, 20b, 20c) arranged along a common flow path (P₁, P₂) comprising a shrunken tubing (62) shrunk at least partially around the filter units (20a, 20b, 20c).

11. The filter assembly (1) according to claim 10, wherein the filter units (20a, 20b, 20c) are of different types.

12. The filter assembly (1) according to claim 11, wherein at least one of the filter units (20a, 20b, 20c) is selected from the following:
- sieve unit;
- fluid treatment unit;
- membrane unit.

13. The filter assembly (1) according to claim 12, wherein the fluid treatment unit is a water treatment fluid that comprises at least one of the following components:
- active coal;
- ion exchange resin;
- oxidizing agent;
- food additive.

14. The filter assembly (1) according to any of claims 10 to 13, wherein the filter unit (20a, 20b, 20c) comprises at least one cup (30), in which at least one granular filtration or granular treatment component (34) is arranged.

15. The filter assembly (1) according to claim 13, wherein the component is formed together with a binder into a porous body, in particular a porous disc.

16. The filter assembly (1) according to claim 12, wherein the membrane unit is a micro filtration membrane unit or an ultra filtration membrane unit.

17. The filter assembly (1) according to one of claims 12 or 16, wherein the membrane unit is a hollow fibre membrane unit.

18. The filter assembly (1) according to one of claims 12 or 16 or 17 wherein the membrane unit is provided with a cup (30) as a housing.

19. The filter assembly (1) according to claim 18, wherein the housing is made from plastic, in particular PE, PP, PC, PET, PA.

20. The filter assembly (1) according to claim 18 or 19, wherein the housing generally has the shape of a hollow cylinder.

21. The filter assembly (1) according to one of claims 10 to 20, wherein at least one of the filter units (20a, 20b, 20c) is of generally cylindrical shape.

22. The filter assembly (1) according to one of claims 10 to 21, wherein the filter units (20a, 20b, 20c) have different diameters (D₁, D₂).

23. The filter assembly (1) according to one of claims 10 to 22, wherein the filter units (20a, 20b, 20c) are arranged coaxially along a common axis A.

24. The filter assembly (1) according to one of claims 10 to 23, wherein the shrunken tubing (62) is made from plastic, in particular a fluoropolymer, in particular PTFE (Polytetrafluorethylene), FEP (Fluorinated ethylene propylene), PFA (Perfluoroalkoxy alkanes), ETFE (Ethylene tetrafluoroethylene), PCTFE (Polychlorotrifluoroethylene), PVDF (polyvinylidene difluoride) or ECTFE (Ethylene chlorotrifluoroethylene).

25. The filter assembly (1) according to one of claims 10 to claim 24, wherein the shrunken tubing (62) comprises at least one collar (64, 66), which encompasses an edge of a terminal filter unit (20a, 20b, 20c) of the assembly.

26. A water container in particular a carafe (100) or a bottle (200) having a housing (101, 102) with a water tank and a filter assembly (1) according to any of claims 10 to 25.
